# EUROPÄISCHE PATENTANMELDUNG

(11) **EP 0 916 250 A1**
(43) Veröffentlichungstag der Anmeldung: **19.05.1999**
(21) Anmeldenummer: 98120714.5
(22) Anmeldetag: 31.10.1998
(51) Int. Cl.: A01D 89/00, A01D 80/02

(54) **Landwirtschaftliche Arbeitsmaschine mit auf Tragarmen angeordneten Förderzinken**

(30) Priorität: 06.11.1997 DE 19749088
(71) Anmelder: CLAAS SAULGAU GMBH, D-88340 Saulgau (DE)
(72) Erfinder: Huchler, Ferdinand, 89081 Ulm-Ermingen (DE)

(57) **Zusammenfassung**

Die Erfindung betrifft landwirtschaftliche Arbeitsmaschinen mit auf senkrecht stehenden oder quer zur Fahrtrichtung liegenden oder geneigten Achsen umlaufenden Tragarmen 1, auf denen zur Aufnahme und Weiterleitung von Erntegut Förderzinken 2, 3, 6 angeordnet sind, wobei die Förderzinken 2, 3 und auch die Tragarme 1 aus einem nichtmetallischen, eine hohe Festigkeit aufweisenden elastischen Material bestehen können. Derart gestaltete Förderzinken 2, 3, 6 und Tragarme 1 weisen ein verbessertes elastisches Verhalten auf, so daß die durch Bodenunebenheiten oder Hindernisse an den Tragarmen 1 und den auf ihnen angeordneten Förderzinken 2, 3, 6 angreifenden hohen und häufig wechselnden Belastungen zu einer geringeren bleibenden Verformung oder Beschädigung führen.

## Beschreibung

Die Erfindung betrifft landwirtschaftliche Arbeitsmaschinen gemäß dem Oberbegriff des Patentanspruchs 1.

Aus dem umfangreichen Stand der Technik sind verschiedenste landwirtschaftliche Arbeitsmaschinen bekannt, deren erntegutaufnehmenden Organe als Förderzinken ausgebildet sind. In der europäischen Patentschrift EP 0 516 939 wird eine Heuwerbungsmaschine beschrieben, deren gutaufnehmenden und weiterleitenden Organe durch einstückig ausgeführte, doppelschenklige, mit einem federförmigem Mittelstück versehene metallische, vorzugsweise aus Federstahl bestehende Förderzinken gebildet werden. Befindet sich die Heuwerbungsmaschine in Arbeitsstellung, laufen mit den Förderzinken bestückte Tragarme um annähernd senkrecht stehende Achsen um, wobei über eine Zinkensteuerung dafür gesorgt wird, daß die Förderzinken während eines Umlaufes zur Aufnahme des Erntegutes teilweise den Boden berühren. Bodenunebenheiten und auf dem Boden liegende Hindernisse können dabei zur Behinderung der Zinkenbewegung führen. Obwohl derartige Förderzinken durch ihre Form und die Verwendung von metallischen Werkstoffen höherer Elastizität eine gewisse Widerstandsfähigkeit gegenüber plötzlich auftretenden Stoßbelastungen aufweisen, kommt es in der Praxis immer wieder zu Beschädigungen der Förderzinken und damit zu einer Verschlechterung der Arbeitsweise derartiger Heuwerbungsmaschinen.

Gemäß der europäischen Patentschrift EP 0 473 219 sind außerdem landwirtschaftliche Aufsammelgeräte bekannt, die zur Aufnahme von Erntegut und dessen Weiterleitung an nachfolgende Arbeitsorgane mit ein- oder zweischenklig ausgeführten, unter Umständen keinen federförmigen Bereich aufweisenden Förderzinken versehen sind. Die um quer zur Fahrtrichtung liegende Achsen umlaufenden Förderzinken können während des Gutaufnehmens ebenfalls durch Bodenunebenheiten oder im Arbeitsbereich liegende Hindernisse erhöhten Belastungen ausgesetzt werden. Eine damit verbundene Verformung der Förderzinken kann dazu führen, daß die zwischen Führungsblechen hindurchtretenden Förderzinken mit diesen kollidieren und zu erheblichen Beschädigungen führen. Auch für derartig ausgeführte Förderzinken wäre es von großem Vorteil, wenn deren Elastizität und damit ihr Rückdehnungsverhalten so verbessert würde, daß auch hohe und häufig wechselnde Belastungen zu keiner bleibenden Verformung oder zum Bruch der Förderzinken führen.

Der Erfindung liegt deshalb die Aufgabe zugrunde, Förderzinken für landwirtschaftliche Arbeitsmaschinen so zu gestalten, daß sie durch ein verbessertes elastisches Verhalten bei hohen und häufig wechselnden Belastungen weniger bleibend verformt oder beschädigt werden.

Erfindungsgemäß wird die Aufgabe durch Förderzinken für landwirtschaftliche Arbeitsmaschinen mit den kennzeichnenden Merkmalen des Anspruchs 1 gelöst. Derart gestaltete Förderzinken weisen ein verbessertes elastisches Verhalten auf, so daß die beschriebenen, auf die Förderzinken einwirkenden Belastungen zu einer geringeren bleibenden Verformung oder Beschädigung führen.

Vorteilhafte Ausgestaltungen sind Gegenstand der Unteransprüche und werden nachfolgend anhand eines in drei Zeichnungen dargestellten Ausführungsbeispiels näher erläutert und beschrieben.

Es zeigt
- Figur 1: eine Förderzinkenkombination auf einem Tragarm für Heuwerbungsmaschinen, insbesondere Wender oder Schwader
- Figur 2: eine Förderzinkenkombination für landwirtschaftliche Arbeitsgeräte, die Erntegut aufnehmen und nachfolgenden Arbeitsorganen zuführen, wobei die Förderzinken um quer zur Fahrtrichtung liegende Achsen umlaufen.
- Figur 3: ein mit stiftformigen Förderzinken versehener Tragarm einer landwirtschaftlichen Arbeitsmaschine

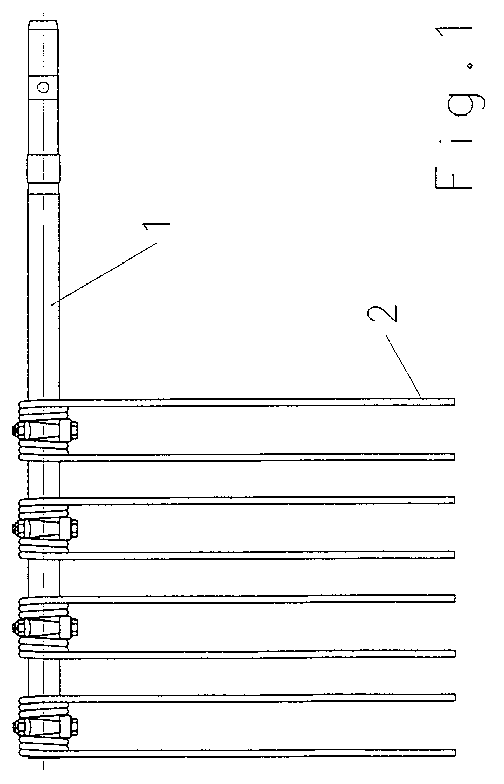

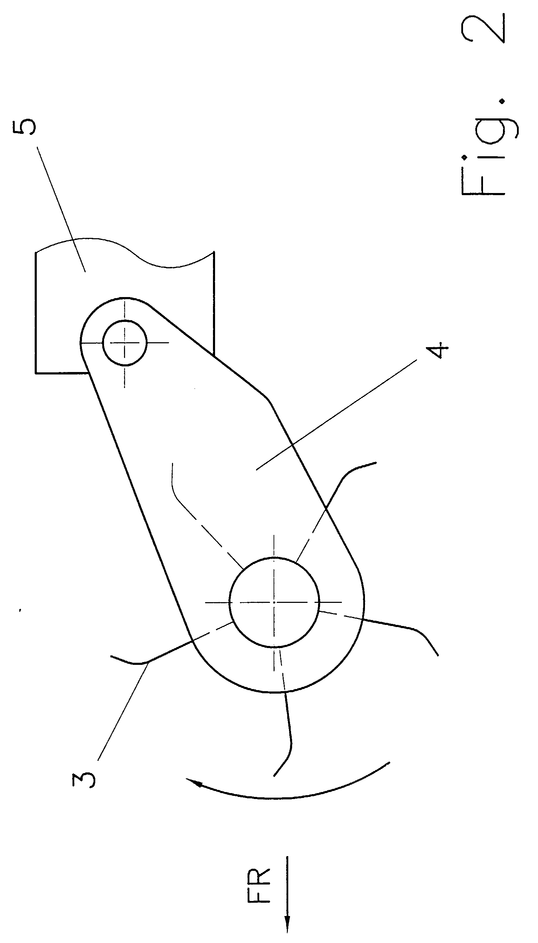

In Figur 1 sind an einem an sich bekannten Tragarm 1 vier erfindungsgemäße Förderzinken 2 angebracht. Der Tragarm 1 wird , wie aus dem Stand der Technik hinlänglich bekannt und deshalb nicht näher beschrieben , an seiner förderzinkenabgewandten Seite an eine Heuwerbungsmaschine, insbesondere Schwader oder Wender adaptiert. Die einstückige, doppelschenklige, Federwindungen aufweisende Gestalt der in Figur 1 dargestellten Förderzinken 2 ist aus dem Stand der Technik ebenfalls allgemein bekannt. Erfindungsgemäß ist nun vorgesehen, daß die Förderzinken 2 aus einem nichtmetallischen, eine hohe Festigkeit aufweisenden, elastischen Material bestehen, so daß hohe und häufig auf den Förderzinken 2 einwirkende Belastungen zu einer geringeren bleibenden Verformung oder Beschädigung des Förderzinkens 2 führen. Als nichtmetallische, eine hohe Festigkeit und Elastizität aufweisende Werkstoffe sind insbesondere Kohlefaser, glasfaserverstärkte Kunststoffe wie Polyester oder Fiberglas vorgesehen. Um den ebenfalls hohen Belastungen ausgesetzten, im allgemeinen mehrere Förderzinken 2 aufnehmenden Tragarm 1 verformungs- und bruchsicherer auszuführen, kann auch der Tragarm 2 aus den für die Förderzinken 2 beschriebenen nichtmetallischen Werkstoffen bestehen. Die am Beispiel eines Förderzinkens 2 für Heuwerbungsmaschinen beschriebene Erfindung umfaßt gemäß Figur 2 auch die um quer zur Fahrtrichtung FR umlaufenden Förderzinken 3 von an sich bekannten Aufsammelgeräten 4, die an unterschiedlichsten landwirtschaftlichen Arbeitsgeräten 5 zum Aufnehmen und Weiterleiten von Erntegut in bekannter Weise adaptiert sind.

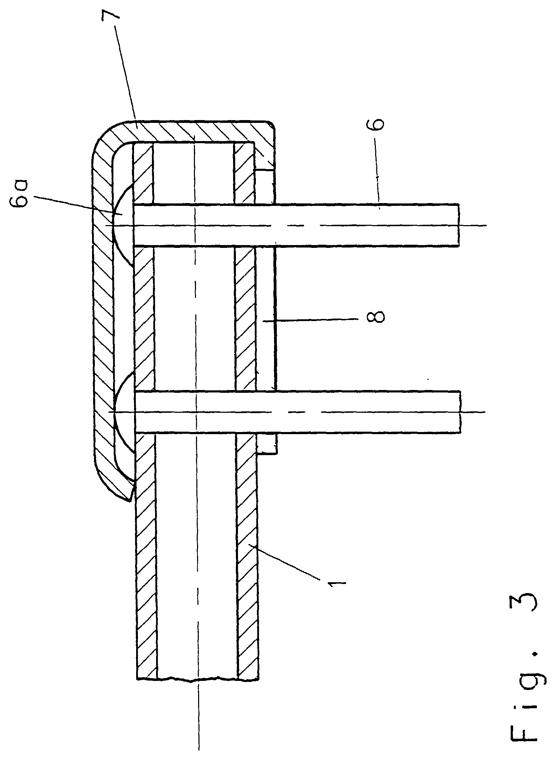

Die verbesserten elastischen Eigenschaften des nichtmetallischen Werkstoffs nutzend, ist gemäß Figur 3 in einem weiteren Ausführungsbeispiel vorgesehen, Förderzinken 6 mit erheblich vereinfachter Gestalt einzusetzen. Die einenends eine kappenförmige Abflachung 6a aufweisenden stiftförmigen Förderzinken 6 sind aufdem Tragarm 1 in Bohrungen geführt und von einer metallisch oder nichtmetallisch ausgeführten Aufsteckhülse 7 derart umgeben, daß die mit einer für den Durchgang der Förderzinken notwendigen Nut 8 versehene Aufsteckhülse 7 die kappenförmige Abflachung 6a der Förderzinken 6 gegen den Tragarm 1 preßt, so daß die unkompliziert ausgeführten Förderzinken 6 auch auf einfache Weise am Tragarm 1 fixiert sind.

Damit ist dem Fachmann eine Anleitung gegeben, erfindungsgemäß ausgeführte Förderzinken auch in anderen nicht beschriebenen Einsatzgebieten zum Aufsammlen und Weiterleiten von unterschiedlichsten Gütern zu verwenden, um die beschriebenen Effekte zu erzielen.

### Bezugszeichenliste

- 1: Tragarm
- 2: Förderzinken
- 3: Förderzinken
- 4: Aufsammelgerät
- 5: landwirtschaftliches Arbeitsgerät
- 6: stiftförmiger Förderzinken
- 6a: kappenförmige Abflachung
- 7: Aufsteckhülse
- FR: Fahrtrichtung

## Patentansprüche

1. Landwirtschaftliche Arbeitsmaschinen mit auf senkrecht stehenden oder quer zur Fahrtrichtung liegend oder geneigt angeordneten Achsen umlaufenden Tragarmen, die zur Aufnahme und Weiterleitung von Erntegut mit Förderzinken versehen sind,
dadurch gekennzeichnet,
daß die zum Teil in ihrer Form bekannten Förderzinken (2, 3, 6) aus einem nichtmetallischen, eine hohe Festigkeit aufweisenden elastischen Material bestehen.

2. Landwirtschaftliche Arbeitsmaschinen mit auf senkrecht stehenden oder quer zur Fahrtrichtung liegend oder geneigt angeordneten Achsen umlaufenden Tragarmen, die zur Aufnahme und Weiterleitung von Erntegut mit Förderzinken versehen sind,
dadurch gekennzeichnet,
daß die Tragarme (1) aus einem nichtmetallischen, eine hohe Festigkeit aufweisenden elastischen Material bestehen.

3. Landwirtschaftliche Arbeitsmaschinen nach Ansprüchen1 und/oder 2,
dadurch gekennzeichnet,
daß das nichtmetallische, eine hohe Festigkeit aufweisende elastische Material ein Kohlefaserwerkstoff ist.

4. Landwirtschaftliche Arbeitsmaschinen nach Ansprüchen 1 und/oder 2,
dadurch gekennzeichnet,
daß das nichtmetallische, eine hohe Festigkeit aufweisende elastische Material ein glasfaserverstärkter Kunststoff, vorzugsweise Polyester ist.

5. Landwirtschaftliche Arbeitsmaschinen nach Ansprüchen 1 und/oder 2,
dadurch gekennzeichnet,
daß das nichtmetallische, eine hohe Festigkeit aufweisende elastische Material Fiberglas ist.

6. Landwirtschaftliche Arbeitsmaschinen nach Ansprüchen 1 - 5, dadurch gekennzeichnet,
daß die Förderzinken (6) stiftförmig ausgeführt sind und eine einseitige kappenförmige Abflachung (6a) aufweisen, die mittels einer Aufsteckhülse 7 gegen den Tragarm 1 gepreßt wird.
